(19) Europäisches Patentamt / European Patent Office / Office européen des brevets

(11) **EP 3 190 087 A1**

(12) **EUROPEAN PATENT APPLICATION**
published in accordance with Art. 153(4) EPC

(43) Date of publication:
**12.07.2017 Bulletin 2017/28**

(51) Int Cl.:
*C01B 33/20* (2006.01)     *B01J 20/10* (2006.01)
*B01J 20/30* (2006.01)     *G21F 9/12* (2006.01)

(21) Application number: **15847637.4**

(22) Date of filing: **30.09.2015**

(86) International application number:
**PCT/JP2015/077715**

(87) International publication number:
**WO 2016/052611 (07.04.2016 Gazette 2016/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **02.10.2014  JP 2014204045**

(71) Applicant: **Nippon Chemical Industrial Co., Ltd.**
**Tokyo 136-8515 (JP)**

(72) Inventors:
• **MIYABE Shinsuke**
**Tokyo 136-8515 (JP)**

• **KINOSE Yutaka**
**Tokyo 136-8515 (JP)**
• **KOZASU Kenta**
**Tokyo 136-8515 (JP)**
• **NOGUCHI Eiji**
**Tokyo 136-8515 (JP)**
• **SAKAMOTO Takeshi**
**Tokyo 136-8515 (JP)**

(74) Representative: **Evans, Marc Nigel**
**Page White & Farrer**
**Bedford House**
**John Street**
**London, WC1N  2BF (GB)**

(54) **METHOD FOR PRODUCING CRYSTALLINE SILICOTITANATE**

(57)    The invention provides an industrially advantageous method for producing a crystalline silicotitanate having high adsorption/removal capabilities for cesium and strontium in seawater. The method includes a first step of mixing a silicic acid source, a sodium compound, titanium tetrachloride, and water to prepare a mixed gel and a second step of hydrothermal reaction of the mixed gel prepared in the first step to produce crystalline silicotitanate of formula: $Na_4Ti_4Si_3O_{16} \cdot nH_2O$ (wherein n represents 0 to 8). In the first step, the silicic acid source, sodium compound, and titanium tetrachloride are mixed in such a mixing ratio that the resulting mixed gel may have a Ti to Si molar ratio, Ti/Si, of 1.2 to 1.5 and an $Na_2O$ to $SiO_2$ molar ratio, $Na_2O/SiO_2$, of 0.7 to 2.5.

2-Theta-Scale

EP 3 190 087 A1

**Description**

Technical Field

This invention relates to a method for producing crystalline silicotitanate (hereinafter abbreviated as CST) that is suited for use in selective and efficient separation and recovery of cesium or strontium from seawater.

Background Art

Co-precipitation treatment is known as a technique for the treatment of waste water containing a radioactive substance (see Patent Literature 1 below). However, the co-precipitation treatment is not effective for removal of radioactive cesium and radioactive strontium that are water soluble. For the time being, removal of radioactive cerium and strontium is carried out by adsorption onto inorganic adsorbents, such as zeolite (see Patent Literature 2 below).

Nevertheless, in cases when radioactive cesium or radioactive strontium leaks into sea, it is a known problem that an increase in sodium concentration in seawater acts to constrain the ion exchange reaction between cesium and an adsorbent (see Non-Patent Literature 1 below).

The inorganic adsorbents that have so far been researched for their ability to adsorb cesium and/or strontium include crystalline silicotitanates (CSTs). CSTs may have several elemental compositions, such as a Ti to Si ratio of 1:1, 5:12, and 2:1. A CST with a Ti to Si ratio of 4:3 is also known to exist. Non-Patent Literature 2 below reports that products 3B and 3C produced by hydrothermal reaction between an alkoxide $Ti(OET)_4$ as a Ti source and colloidal silica as an Si source have a three-dimensional 8-membered ring structure as revealed from their X-ray diffraction patterns and that CSTs having this structure ideally have compositions represented by $M_4Ti_4Si_3O_{16}$ (M is Na, K, or the like). The material having this structure was named Grace titanium silicate (GTS-1). Non-Patent Literature 3 below reports that a CST having a Ti/Si ratio of 4:3 is produced by a hydrothermal treatment of a mixed solution containing titanium tetrachloride as a Ti source and highly dispersed $SiO_2$ powder as an Si source. Non-Patent Literature 3 describes that the synthesized CST has strontium ion-exchange ability.

Citation List

Patent Literature

    Patent Literature 1: JP 62-266499A
    Patent Literature 2: JP 2013-57599A

Non-Patent Literature

    Non-Patent Literature 1: JAEA-Research 2011-037
    Non-Patent Literature 2: ZEOLITES, 1990, vol. 10, November/December
    Non-Patent Literature 3: Keiko Fujiwara, "Improvement and Evaluation of Micro-porous Crystals for Heat Pump Absorbents" [online] http://kaken.ii.ac.jp/pdf/2011/seika/C-19/15501/21560846seika.pdf (2014/3/3)

Summary of Invention

Technical Problem

While a CST with a Ti/Si ratio of 4:3 is reported to have strontium ion-exchange ability as noted above, further improvement on adsorbency for not only cesium but strontium has been demanded.

Accordingly, an object of the invention is to provide an industrially advantageous method for producing a CST that is effective as an adsorbent capable of adsorbing cesium and also strontium in seawater.

Solution to Problem

As a result of intensive investigations with a view to achieving the above object, the inventors have found that a CST represented by formula: $Na_4Ti_4Si_3O_{16} \cdot nH_2O$ (where n is a number of 0 to 8) that is useful as an adsorbent for cesium and strontium in seawater is obtained efficiently by a hydrothermal reaction of a mixed gel prepared by mixing a silicic acid source, a sodium compound, titanium tetrachloride, and water in such a mixing ratio that the Ti to Si ratio is in a specific range and that the $Na_2O$ (represents alkali metals of Na and K) to $SiO_2$ molar ratio is in a specific range.

The inventors have also found that a CST useful as an adsorbent for cesium and strontium adsorbent in seawater is obtained efficiently by a hydrothermal reaction of a mixed gel prepared by, in the step of mixing, further adding a potassium compound in such a mixing ratio that the $A_2O$ (wherein A is alkali metals Na and K) to $SiO_2$ molar ratio is in a specific range. The invention has been reached based on these findings.

The invention provides in its first aspect a method for producing a CST represented by formula: $Na_4Ti_4Si_3O_{16} \cdot nH_2O$ (wherein n represents a number of 0 to 8). The method includes a first step of mixing a silicic acid source, a sodium compound, titanium tetrachloride, and water to prepare a mixed gel and a second step of hydrothermal reaction of the mixed gel prepared in the first step. The mixing ratio of the silicic acid source, sodium compound, and titanium tetrachloride in the first step is such that the resulting mixed gel has a Ti to Si molar ratio of 1.2 to 1.5 and an $Na_2O$ to $SiO_2$ molar ratio of 0.5 to 2.5.

The invention provides in its second aspect a method for producing a CST represented by formula: $A_4Ti_4Si_3O_{16} \cdot nH_2O$ (wherein A represents alkali metals of Na and K; and n represents a number of 0 to 8). The method is characterized in that, in the above described first step of mixing, a potassium compound is additionally mixed in such a mixing ratio that the resulting mixed gel may have a Ti to Si molar ratio, Ti/Si, of 1.2 to 1.5 and an $A_2O$ (wherein A is as defined above) to $SiO_2$ molar ratio, $A_2O/SiO_2$, of 0.5 to 2.5. The resulting mixed gel is subjected to hydrothermal reaction.

Advantageous Effects of Invention

The invention enables industrially advantageous production of a CST having high adsorption/removal capabilities for cesium and strontium in seawater.

Brief Description of Drawing

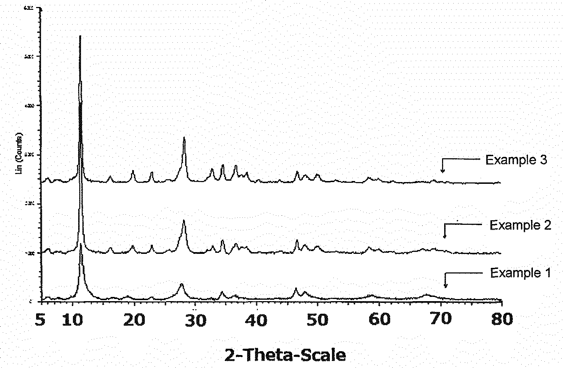

[Fig. 1] Fig. 1 shows X-ray diffraction patterns of the CSTs obtained in Examples 1 to 3.

Description of Embodiments

The method of the invention for producing a CST will be illustrated with reference to its preferred embodiments.

The method of the invention includes a first step of mixing a silicic acid source, a sodium compound with or without a potassium compound, titanium tetrachloride, and water to prepare a mixed gel and a second step of hydrothermal reaction of the mixed gel prepared in the first step.

When, in the first step, a sodium compound is used without using a potassium compound, the product is a CST of formula: $Na_4Ti_4Si_3O_{16} \cdot nH_2O$ (wherein n is 0 to 8) having a Ti to Si molar ratio of 4 to 3 and exhibiting a single phase in X-ray diffractometry (XRD).

When in the first step a sodium compound is used in combination with a potassium compound, the product is a CST of formula: $A_4Ti_4Si_3O_{16} \cdot nH_2O$ (wherein A is alkali metals of Na and K; and n is 0 to 8) having a Ti to Si molar ratio of 4:3 and exhibiting a single phase in XRD.

Although a more precise composition of the CST represented by formula $A_4Ti_4Si_3O_{16} \cdot nH_2O$ (wherein A is alkali metals of Na and K; and n is 0 to 8) is not clarified, the inventors presume that it contains both $Na_4Ti_4Si_3O_{16} \cdot nH_2O$ and $K_4Ti_4Si_3O_{16} \cdot nH_2O$ or it is represented by formula: $(Na_xK_{(1-x)})_4Ti_4Si_3O_{16} \cdot nH_2O$ (wherein 0<x<1). Accordingly, the term "single phase" as used herein with respect to $A_4Ti_4Si_3O_{16} \cdot nH_2O$ is intended to mean that neither a CST other than the CST having a Ti to Si molar ratio of 4:3 nor any by-products, such as $Na_4Ti_9O_{20} \cdot mH_2O$, $K_4Ti_9O_{20} \cdot mH_2O$, $(Na_yK_{(1-y)})_4Ti_9O_{20} \cdot mH_2O$ (wherein 0<y<1), and $TiO_2$ are observed in XRD.

The silicic acid source used in the first step is exemplified by sodium silicate. Activated silicic acid obtained by cation exchange of an alkali silicate (an alkali metal salt of silicic acid) is also useful.

Activated silicic acid is obtained by bringing an aqueous solution of an alkali silicate into contact with a cation exchange resin to effect cation exchange. A sodium silicate aqueous solution called water glass (water glasses No.1 to No.4 or the like), which is relatively inexpensive and readily available, is suitably used as a raw material of the alkali silicate aqueous solution. For semiconductors applications where Na ions should be avoided, a potassium silicate aqueous solution is suitable as a raw material. An alkali silicate aqueous solution may be prepared by dissolving a solid alkali metasilicate in water. Because an alkali metasilicate is produced by a process involving crystallization, some of available alkali metasilicate products have only a trace of impurities. Where necessary, the alkali silicate aqueous solution is used as diluted with water.

The cation exchange resin that can be used in the preparation of activated silicic acid may be selected appropriately from known cation exchange resins with no particular restriction. The contact between the alkali silicate aqueous solution and the cation exchange resin can be carried out, for example, as follows. The alkali silicate aqueous solution is diluted with water to a silica concentration of 3 mass% to 10 mass% and brought into contact with an H-form strongly or weakly acidic cation exchange resin to effect dealkalization. If necessary, the solution is then brought into contact with an OH-form strongly basic anion exchange resin to remove anions. Through these steps, an activated silicic acid aqueous solution is prepared. There are various proposals about the detailed conditions of the contact between an alkali silicate aqueous solution and a cation exchange resin, and any of the known conditions may be adopted to carry out the invention.

Examples of the sodium compound used in the first step include sodium hydroxide and sodium carbonate. In order to achieve a neutralization reaction in a smooth manner, sodium hydroxide is preferred to sodium carbonate because the latter compound evolves carbon dioxide. Use of sodium hydroxide is not accompanied by such gas evolution.

Examples of the potassium compound used in the first step include potassium hydroxide and potassium carbonate. In order to achieve a neutralization reaction in a smooth manner, potassium hydroxide is preferred to potassium carbonate because the latter compound evolves carbon dioxide. Use of potassium hydroxide is not accompanied by such gas evolution.

In the case where both the sodium compound and the potassium compound are used in the first step, their amounts to be added are preferably in such a manner that the ratio of the number of moles of K to the hereinafter defined number of moles of A in the resulting mixed gel is in a range of from more than 0% to 40%, more preferably from 5% to 30%. The "number of moles of A" in the mixed gel is defined to be (the number of moles of Na ions derived from sodium compound + the number of moles of K ions derived from potassium compound).

When sodium silicate or potassium silicate is used as a silicic acid source, the amount of the sodium or potassium ions contained in the sodium silicate or potassium silicate is reckoned in calculating the number of moles of A. In that case, the number of moles of A is calculated as (the number of moles of sodium ions derived from sodium silicate + the number of moles of potassium ions derived from potassium silicate + the number of moles of sodium ions derived from sodium compound other than sodium silicate + the number of moles of potassium ions derived from potassium compound other than potassium silicate).

The method of the invention for the production of the CST is characterized by using titanium tetrachloride as a titanium source. When any other titanium compound such as titanium oxide is used as a titanium source, unreacted titanium oxide tends to remain, or a CST other than the desired one with a Ti:Si molar ratio of 4:3 tends to form. For that reason, titanium tetrachloride is used in the invention as a titanium source.

Titanium tetrachloride for use in the first step is not particularly limited and may be any of commercially available titanium tetrachloride products.

The method of the invention for the production of the CST is also characterized by adding the silicic acid source and titanium tetrachloride in such amounts that the Ti/Si, the molar ratio of Ti derived from titanium tetrachloride to Si derived from the silicon source, is in a specific range. Specifically, in Non-Patent Literature 3 in which titanium tetrachloride is used as a titanium source, a silicic acid source and titanium tetrachloride are added to a mixed solution at a Ti to Si molar ratio of 0.32. In contrast, the silicic acid source and titanium tetrachloride are added in the invention at a Ti to Si molar ratio of from 1.2 to 1.5. As a result of study, the inventors have ascertained that, when the mixed gel has a Ti/Si ratio in that specific range, a CST having a high degree of crystallinity is obtained easily, and the resulting CST exhibits improved adsorbency particularly for cesium when used as an adsorbent. From these considerations, the Ti/Si ratio in the mixed gel is preferably 1.3 to 1.4.

With a view to obtaining the desired CST with good yield, the total concentration of the silicic acid source in $SiO_2$ equivalent and titanium tetrachloride in $TiO_2$ equivalent in the mixed gel preferably ranges from 2.0 mass% to 40 mass%, more preferably 3 mass% to 30 mass%, even more preferably 5 mass% to 20 mass%.

The method of the invention is characterized in that, in the first step of the first invention, the mixed gel has an $A_2O/SiO_2$ molar ratio of 0.5 to 2.5, preferably 0.6 to 1.1. As a result of the study, the inventors have ascertained that, when the $A_2O/SiO_2$ ratio of the mixed gel is in the above specified range, a desired CST with the above discussed physical properties is obtained in good yield with X-ray diffractometrical purity and higher crystallinity, and the resulting CST exhibits improved adsorbency for cesium and also for strontium when used as an adsorbent.

With the view of further improving adsorbency for cesium and strontium, the mixed gel preferably has a potassium content of 5 to 30 mol% in $K_2O$ equivalent relative to the content of $A_2O$.

Each of the silicic acid source, sodium compound, potassium compound (if used), and titanium tetrachloride that are used in the first step may be added to a reaction system in the form of an aqueous solution. In some cases, they may be added in solid form. Where needed, the resulting mixed gel may be diluted with pure water to adjust the concentration in the first step.

In the first step, the silicic acid source, sodium compound, potassium compound (if used), and titanium tetrachloride may be added in various orders. For example, the silicic acid source, sodium compound, potassium compound (if used), and water are first mixed up, and titanium tetrachloride is added thereto to make a mixed gel. This manner of addition will be referred to as manner 1. Manner 1 is preferred in terms of controlling generation of chlorine from titanium tetrachloride.

Otherwise, an aqueous solution of activated silicic acid obtained by cation exchange of an alkali silicate (hereinafter simply referred to as activated silicic acid), titanium tetrachloride, and water are first mixed up, and the sodium compound and, if used, the potassium compound is/are then added thereto to make a mixed gel. This manner of addition will be referred to as manner 2. Titanium tetrachloride may be added in either aqueous solution or solid form. Similarly, the sodium compound and the potassium compound, if used, may be added in either aqueous solution or solid form.

In carrying out the first step according to manner 1 or 2, it is preferred to add the sodium compound and, if desired, the potassium compound in such amounts that the total concentration of sodium and potassium (i.e., $A_2O$ concentration) in the mixed gel is 0.5 mass% to 15.0 mass%, more preferably 0.7 mass% to 13 mass%, in $Na_2O$ equivalent. The total mass of sodium and potassium in the mixed gel in $Na_2O$ equivalent and the total concentration of sodium and potassium in the mixed gel in $Na_2O$ equivalent (when the potassium compound is not used in the first step, the total concentration of sodium and potassium corresponds to the sodium concentration) are calculated as follows.

$$\text{Total mass (g) of Na and K in mixed gel in } Na_2O \text{ equivalent} = (\text{the number of moles of A (defined above)} - \text{the number of moles of chloride ion derived from titanium tetrachloride}) \times 0.5 \times \text{molecular weight of } Na_2O.$$

$$\text{Total concentration (mass\%) of Na and K in mixed gel in } Na_2O \text{ equivalent} = \text{total mass of Na and K in mixed gel in } Na_2O \text{ equivalent}/\{\text{water content in mixed gel} + \text{total mass of Na and K in mixed gel in } Na_2O \text{ equivalent}\} \times 100.$$

Selection of the silicic acid source combined with adjustment of the total concentration of sodium and potassium in the mixed gel allows for inhibiting formation of CSTs other than the CST with a Ti to Si molar ratio of 4:3. In using sodium silicate or potassium silicate as a silicic acid source, adjusting the total concentration of sodium and potassium in $Na_2O$ equivalent in the mixed gel to 2.0 mass% or more effectively enables inhibition of the formation of a CST with a Ti to Si molar ratio of 5:12, and adjusting the total concentration of sodium and potassium in $Na_2O$ equivalent to 4.5 mass% or less effectively enables inhibition of the formation of a CST with a Ti to Si molar ratio of 1:1. In using activated silicic acid obtained by cation exchange of an alkali silicate as a silicic acid source, adjusting the Na/K total concentration in $Na_2O$ equivalent to 1.0 mass% or more enables effective inhibition of the formation of a CST with a Ti to Si molar ratio of 5:12, and adjusting the Na/K total concentration in $Na_2O$ equivalent to 6.0 mass% or less enables effective inhibition of the formation of a CST with a Ti to Si molar ratio of 1:1.

In using sodium silicate as a silicic acid source, the sodium component of the sodium silicate also serves as a sodium source in the mixed gel. Therefore, the "mass (g) of sodium in the mixed gel in $Na_2O$ equivalent" as referred to herein is defined to be the sum of all the sodium present in the mixed gel. Likewise, the "mass (g) of potassium in the mixed gel in $Na_2O$ equivalent" as referred to herein is defined to be the sum of all the potassium present in the mixed gel.

In carrying out the first step according to either manner 1 or 2, it is desirable that titanium tetrachloride be added in the form of an aqueous solution stepwise or continuously over a given period of time in order to obtain a uniform gel. To achieve such an operation, addition may suitably be carried out using a peristaltic pump or the like.

Prior to the hydrothermal reaction of the second step, the mixed gel obtained in the first step is preferably aged for a period of 0.1 to 5 hours at 10° to 100°C in the interests of obtaining a uniform product. The aging may be conducted by either allowing the mixed gel to stand still or stirring the mixed gel using, for example, a line mixer.

In the invention, the mixed gel obtained in the first step is subjected to a hydrothermal reaction of the second step to obtain the CST. The hydrothermal reaction conditions are not limited as long as a desired CST is synthesized. The hydrothermal reaction is usually performed by heating, under pressure, the mixed gel in an autoclave preferably at 120° to 200°C, more preferably 140° to 180°C, preferably for 6 to 90 hours, more preferably 12 to 80 hours. The reaction time is decided according to the scale of the equipment.

The CST as obtained in the second step, which contains water, is dried. If necessary, the dried product is crushed to granules or ground to powder (including granulation). The water-containing CST as obtained in the second step may be extruded from a perforated plate having a plurality of openings into rods, followed by drying. The dried rod-shaped products may be formed into spheres or crushed or ground to particles. In the case when the water-containing CST is extrusion molded before drying, the recovery yield of the CST in classification by the method described infra increases. As used herein, the term "crush" means to disintegrate agglomerates of fine particles, and the term "grind" means to further reducing the size of the crushed solid particles using a mechanical force.

The openings of the perforated plate may have a circular, triangular, polygonal, or annular shape. The individual opening preferably has a circle equivalent diameter of 0.1 mm to 10 mm, more preferably 0.3 mm to 5 mm. As used herein, the term "circle equivalent diameter" refers to the diameter of a circle with the same area as the opening. The drying after extrusion molding may be, for example, 50° to 200°C, and the drying time may be 1 to 120 hours.

The dried rod-shaped molded product may be used as an adsorbent either as such or after lightly disintegrated. The rod-like molded product after drying may be used as ground. The CST of powder form as obtained by these various operations is preferably classified for use as an adsorbent in the interests of increasing cesium and/or strontium adsorption efficiency. Classification is preferably carried out using, for example, a first sieve having a nominal size of 1000 $\mu$m or smaller, more preferably 710 $\mu$m or smaller, as specified in JIS Z8801-1. Classification using a second sieve having a nominal size of 100 $\mu$m or greater, more preferably 300 $\mu$m or greater, as specified in JIS Z8801-1 is also preferred. It is also preferred to carry out classification using both the first and second sieves described.

In the case where only the sodium compound is used as an alkali metal compound in the first step, a CST represented by formula: $Na_4Ti_4Si_3O_{16} \cdot nH_2O$ (where n is 0 to 8) is obtained as an X-ray diffractometrically single phase. When both the sodium compound and potassium compound are used in the first step, a CST represented by formula: $A_4Ti_4Si_3O_{16} \cdot nH_2O$ (where A is alkali metals Na and K; and n is 0 to 8) is obtained as an X-ray diffractometrically single phase. One of the characteristics of the product obtained by the method of the invention consists in that, as can be seen from these formulae, a CST with a Ti:Si molar ratio of 4:3 is produced with substantially neither CSTs other than the CST having a Ti:Si molar ratio of 4:3 nor by-products, such as $Na_4Ti_9O_{20} \cdot mH_2O$, $K_4Ti_9O_{20} \cdot mH_2O$, and $(Na_yK_{(1-y)})_4Ti_9O_{20} \cdot mH_2O$ (wherein 0<y<1; and m = 0 to 10), observed in XRD.

Another characteristic of the CST product obtained by the method of the invention resides in that it is free from titanium oxide impurity. To be free from titanium oxide can be confirmed by the XRD pattern of the product CST showing no peak assigned to titanium oxide at $2\theta = 25°$.

The CST obtained by the method of the invention exhibits excellent adsorption removal capabilities particularly for cesium and also high adsorption removal capabilities for strontium. These characteristics being taken advantage of, the CST may be further processed as required in a usual manner, and the resulting processed CST product can suitably be used as a cesium and/or strontium adsorbent.

Processing methods applicable to the CST include (1) granulation of CST powder or a powder adsorbent containing the CST powder, (2) encapsulation by dropwise addition of a slurry of CST powder into a liquid containing a hardening agent, such as calcium chloride, (3) applying CST powder to a plastic core to provide a CST-coated core, (4) attaching and immobilizing CST powder or a powder adsorbent containing the CST powder onto and/or into a sheet substrate made of natural or synthetic fiber to provide a CST-loaded sheet adsorbent. The granulation of CST or CST-containing powder may be carried out by known techniques, such as agitation granulation, tumbling granulation, extrusion granulation, disintegrating granulation, fluidized bed granulation, spray drying granulation, and compression granulation. If necessary, the powder may be mixed with a binder or a solvent. Known binders may be used, including polyvinyl alcohol, polyethylene oxide, hydroxyethyl cellulose, hydroxypropyl cellulose, hydroxypropylmethyl cellulose, hydroxyethylmethyl cellulose, carboxymethyl cellulose, hydroxypropylmethyl cellulose, methyl cellulose, ethyl cellulose, starch, corn starch, molasses, lactose, gelatin, dextrin, gum arabic, alginic acid, polyacrylic acid, glycerin, polyethylene glycol, and polyvinyl pyrrolidone. Various solvents, including aqueous solvents and organic solvents, may be used in granulation.

Granular CST obtained by granulating the water-containing CST prepared by the method of the invention is suited for application to a water treatment system having an adsorption vessel or tower filled with a radioactive substance adsorbent.

For that use, the shape and size of the CST granules obtained from the water-containing CST to be packed into the vessel or tower are advantageously decided to accommodate the passage of cesium- and/or strontium-contaminated water to be treated through the vessel or tower.

The granular CST obtained by granulating the water-containing CST prepared by the method of the invention may have magnetic particles incorporated therein for use as an adsorbent capable of being collected from cesium- and/or strontium-contaminated water by magnetic separation. Examples of useful magnetic particles include particles of metals, such as iron, nickel, and cobalt, and magnetic alloys based on these metals; and particles of magnetic metal oxides, such as triiron tetraoxide, diiron trioxide, cobalt-doped iron oxide, barium ferrite, and strontium ferrite.

Incorporation of magnetic particles into the CST granules may be achieved by, for example, carrying out the above described granulation processing in the presence of the magnetic particles.

Examples

The invention will now be illustrated in greater detail by way of Examples and Comparative Examples, but it should be understood that the invention is not deemed to be limited thereto. Unless otherwise noted, all the percents are given by mass. Equipment for evaluation and materials used in Examples and Comparative Examples are illustrated below.

Equipment for Evaluation:

XRD was performed using D8 Advance S from Bruker and Cu-K$\alpha$ radiation under conditions of a tube voltage of 40 kV, a tube current of 40 mA, and a scanning speed of 0.1°/sec.

ICP-AES was done using 720-ES from Varian.

Cs and Sr adsorption test was carried out at measuring wavelengths of 697.327 nm for Cs and 216.596 nm for Sr. Standard samples were 0.3% NaCl aqueous solutions containing 100 ppm, 50 ppm, and 10 ppm of Cs and 0.3% NaCl aqueous solutions containing 100 ppm, 10 ppm, and 1 ppm of Sr.

Materials:

Potassium silicate: available from Nippon Chemical Industrial Co., Ltd. ($SiO_2$: 26.5%, $K_2O$: 13.5%, $H_2O$: 60.00%, $SiO_2/K_2O$ = 3.09).

Sodium silicate: available from Nippon Chemical Industrial Co., Ltd. ($SiO_2$: 28.96%, $Na_2O$: 9.37%, $H_2O$: 61.67%, $SiO_2/Na_2O$ = 3.1).

Potassium hydroxide: solid reagent (KOH: 85%).

Sodium hydroxide aqueous solution: industrial 25% sodium hydroxide (NaOH: 25%, $H_2O$: 75%).

Titanium tetrachloride aqueous solution: 36.48% aqueous solution from Osaka Titanium Technologies Co., Ltd.

Titanium dioxide: ST-01, from Ishihara Sangyo Kaisha, Ltd.

Seawater simulant: 0.3% NaCl aqueous solution containing 100 ppm Cs and 100 ppm Sr, which was prepared by mixing 3.0151 g of NaCl (99.5%), 0.3074 g of $SrCl \cdot 6H_2O$ (99%), 0.1481 g of $CsNO_3$ (99%), and 996.5294 g of $H_2O$.

Examples 1 to 3

Synthesis of CST

(1) First step

Sodium silicate, 25% sodium hydroxide, 85% potassium hydroxide, and pure water were mixed by stirring in the amounts shown in Table 1 below. To the resulting mixed aqueous solution was added a titanium tetrachloride aqueous solution in the amount shown in Table 1 in a continuous manner using a peristaltic pump over a period of 0.5 hours to prepare a mixed gel. After completion of the addition of the titanium tetrachloride aqueous solution, the mixed gel was allowed to stand for aging at room temperature (25°C) for 1 hour.

(2) Second step

The mixed gel obtained in the first step was placed in an autoclave, heated up to the temperature shown in Table 1 over 1 hour, and maintained at that temperature while stirring to perform reaction. After the reaction, the slurry was filtered, washed, and dried to yield a lumpy CST. The composition of the resulting CST as determined from the XRD structure is shown in Table 2 below. Chemical composition analysis of the CST was conducted by ICP. The Na and K contents as expressed in $Na_2O$ equivalent and $K_2O$-equivalent content, respectively, are also shown in Table 2. The XRD patterns of the CSTs obtained in Examples 1 to 3 are shown in Fig. 1.

Comparative Example 1

Ninety grams of sodium silicate of JIS No. 3, 121.2 g of a sodium hydroxide aqueous solution, and 776.1 g of pure water were mixed by stirring. To the resulting mixed aqueous solution was added a slurry prepared by dispersing 68.2 g of titanium dioxide in 270 g of ion exchanged water in a continuous manner over a period of 5 minutes to prepare a mixed gel. After completion of the addition of the titanium dioxide, the mixed gel was allowed to stand for aging at room temperature for 1 hour. The mixed gel was placed in an autoclave, heated up to 170°C over 1 hour, and maintained at that temperature while stirring to perform reaction for 24 hours. After the reaction, the slurry was filtered, washed, and dried to give a CST. The Ti to Si molar ratio in the mixed gel was 2:1. The mixed gel had an $SiO_2$ concentration of 2.47%, a $TiO_2$ concentration of 6.46%, and an $Na_2O$ concentration of 3.32%. The composition of the resulting CST as determined from the XRD structure is shown in Table 2. As a result of XRD, the presence of titanium oxide as an impurity was observed.

Table 1

| | | Example 1 | Example 2 | Example 3 | Compara. Example 1 |
|---|---|---|---|---|---|
| Amounts (g) | Sodium silicate (JIS No. 3) | 60 | 60 | 90 | 90 |
| | $TiCl_4$ solution | 203.3 | 203.3 | 203.3 | - |
| | 25% Sodium hydroxide | 308.2 | 224.3 | 139.8 | 121.2 |
| | 85% Potassium hydroxide | - | 34.6 | 69.4 | - |
| | Ion exchanged water | 33.2 | 82.5 | 132.2 | 506.1 |
| | Titanium dioxide | - | - | - | 68.2 |
| Mixed Gel | Ti/Si molar ratio | 1.33 | 1.33 | 1.33 | 2 |
| | $K_2O/Na_2O$ molar ratio | - | 25/75 | 50/50 | - |
| | $SiO_2$-equivalent concentration (a) (%) | 2.83 | 2.83 | 4.04 | 2.47 |
| | $TiO_2$-equivalent concentration (b) (%) | 5.14 | 5.14 | 4.90 | 6.46 |
| | (a) + (b) | 7.97 | 7.97 | 8.94 | 8.93 |
| | $A_2O/SiO_2$ molar ratio | 0.926 | 0.936 | 0.721 | 1.198 |
| | $Na_2O$-equivalent concentration (%) | 3.64 | 3.71 | 4.20 | 3.32 |
| Reaction Conditions | Reaction Temperature (°C) | 170 | 170 | 170 | 170 |
| | Reaction Time (hr) | 96 | 96 | 96 | 24 |

Table 2

| | XRD Structure | $Na_2O$ Content (%) | $K_2O$ Content (%) |
|---|---|---|---|
| Example 1 | single phase $Na_4Ti_4Si_3O_{16} \cdot 6H_2O$, with neither other CSTs nor $TiO_2$ detected. | 20 | 0 |
| Example 2 | single phase $A_4Ti_4Si_3O_{16} \cdot 6H_2O$ (A=Na and K), with neither other CSTs nor $TiO_2$ detected. | 12.7 | 25 |
| Example 3 | single phase $A_4Ti_4Si_3O_{16} \cdot 6H_2O$ (A=Na and K), with neither other CSTs nor $TiO_2$ detected. | 11.1 | 50 |
| Compara. Example 1 | main phase $Na_4Ti_4Si_3O_{16} \cdot 6H_2O$, with $Na_2TiOSiO_4$ and $TiO_2$ detected. | - | - |
| Note: "-" means not measured. | | | |

Cs and Sr Adsorption Test

The resulting lumpy CST was ground in a mortar and classified using a 600 $\mu$m sieve and a 300 $\mu$m sieve to obtain granules of 300 to 600 $\mu$m. A 0.5 g portion of the granular CST was put in a 100 ml plastic container, and 100.00 g of the seawater simulant was added thereto. The container was closed with a lid and shaken by inversion ten times (hereinafter the same) and allowed to stand still for one hour, followed by shaking again. An about 50 ml portion of the contents was filtered through 5C filter paper, and the filtrate was collected. The remaining half of the contents was allowed to stand. After 23 hour standing (i.e., after 24 hours from the first shaking), the container was shaken again and filtered through 5C filter paper to give a filtrate. The thus collected filtrate was analyzed by ICP-AES to determine the Cs and Sr contents. The results obtained are shown in Table 3.

Table 3

|  | Cs Adsorption (%) | Sr Adsorption (%) |
|---|---|---|
| Example 1 | 77.1 | 80.4 |
| Example 2 | 82.4 | 83.1 |
| Example 3 | 76.8 | 80.8 |
| Compara. Example 1 | 12.6 | 67 |

As is apparent from the results in Tables 2 and 3 and Fig. 1, single phase CSTs with a Ti to Si molar ratio of 4:3 are obtained in Examples, and these CSTs prove capable of adsorbing and removing Cs and Sr contained in the seawater simulant at high adsorption percentages. It is seen that the Cs and Sr adsorbency is further improved by adopting the conditions of Example 2.

**Claims**

1. A method for producing a crystalline silicotitanate represented by formula:

   $Na_4Ti_4Si_3O_{16} \cdot nH_2O$ (wherein n represents 0 to 8) comprising:

   a first step of mixing a silicic acid source, a sodium compound, titanium tetrachloride, and water to prepare a mixed gel and
   a second step of conducting a hydrothermal reaction of the mixed gel,
   the mixing ratio of the silicic acid source, sodium compound, and titanium tetrachloride in the first step being such that the resulting mixed gel has a Ti to Si molar ratio of 1.2 to 1.5 and an $Na_2O$ to $SiO_2$ molar ratio of 0.5 to 2.5.

2. A method for producing a crystalline silicotitanate represented by formula:

   $A_4Ti_4Si_3O_{16} \cdot nH_2O$ (wherein A represents alkali metals of Na and K; and n represents a number of 0 to 8), comprising
   in the first step, a potassium compound is additionally mixed in such a mixing ratio that the resulting mixed gel has an $A_2O$ (wherein A is as defined above) to $SiO_2$ molar ratio, $A_2O/SiO_2$, of 0.5 to 2.5, and
   the resulting mixed gel is subjected to hydrothermal reaction.

3. The method for producing a crystalline silicotitanate according to claim 2, wherein the potassium content in $A_2O$ is greater than 0 to 40 mol% in $K_2O$ equivalent.

4. The method for producing a crystalline silicotitanate according to any one of claims 1 to 3, wherein the silicic acid source and titanium tetrachloride are added in the first step in such amounts that the total concentration of the silicic acid source in $SiO_2$ equivalent and titanium tetrachloride in $TiO_2$ equivalent in the mixed gel ranges from 2.0 mass% to 40 mass%.

5. A cesium adsorbent comprising the crystalline silicotitanate obtained by the method according to any one of claims 1 to 4.

6. A strontium adsorbent comprising the crystalline silicotitanate obtained by the method according to any one of claims 1 to 4.

**INTERNATIONAL SEARCH REPORT**

| International application No. |
| --- |
| PCT/JP2015/077715 |

A. CLASSIFICATION OF SUBJECT MATTER
*C01B33/20*(2006.01)i, *B01J20/10*(2006.01)i, *B01J20/30*(2006.01)i, *G21F9/12*
(2006.01)i

According to International Patent Classification (IPC) or to both national classification and IPC

B. FIELDS SEARCHED

Minimum documentation searched (classification system followed by classification symbols)
C01B33/20-39/54, B01J20/00-20/34, G21F9/12

Documentation searched other than minimum documentation to the extent that such documents are included in the fields searched
Jitsuyo Shinan Koho         1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)
JSTPlus/JST7580(JDreamIII), CiNii

C. DOCUMENTS CONSIDERED TO BE RELEVANT

| Category* | Citation of document, with indication, where appropriate, of the relevant passages | Relevant to claim No. |
| --- | --- | --- |
| A | Brian R. Cherry et al., Journal of Solid State Chemistry, 2004.06.06, Vol.177, No.6, p.2079-2093 | 1-6 |
| A | Alan Dyer et al., MICROPOROUS AND MESOPOROUS MATERIALS, 2009.04.15, Vol.120, Issue3, p.272-277 | 1-6 |
| A | Hitoshi MIMURA, Nendo Kagaku, 2011, vol.50, no.2, pages 45 to 48 | 1-6 |
| A | Lawrence N. Oji, et al., WM2012 Conference, 2012, SRNL-STI-2011-00697, 1-13 | 1-6 |
| A | Z.Zheng et al., Ind.Eng.Chem.Res., 1997, Vol.36, No.6, p.2427-2434 | 1-6 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>10 December 2015 (10.12.15) | Date of mailing of the international search report<br>22 December 2015 (22.12.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

## INTERNATIONAL SEARCH REPORT

International application No.

PCT/JP2015/077715

C (Continuation).   DOCUMENTS CONSIDERED TO BE RELEVANT

| Category* | Citation of document, with indication, where appropriate, of the relevant passages | Relevant to claim No. |
|---|---|---|
| A | Ding Gu et al., Ind.Eng.Chem.Res., 1997, Vol.36, No.12, p.5377-5383 | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62266499 A

- JP 2013057599 A

**Non-patent literature cited in the description**

- *JAEA-Research,* 2011, 037
- *ZEOLITES,* November 1990, vol. 10

- **KEIKO FUJIWARA.** *Improvement and Evaluation of Micro-porous Crystals for Heat Pump Absorbents, ht-tp://kaken.ii.ac.jp/pdf/2011/seika/C-19/15501/21560846seika.pdf* (2014/3/3)